# EUROPEAN PATENT SPECIFICATION

(11) **EP 0 355 423 B1**
(45) Date of publication and mention of the grant of the patent: **01.05.1996**
(21) Application number: 89113479.3
(22) Date of filing: 21.07.1989
(51) Int. Cl.: H05B 6/02, C09J 5/06, B29C 65/36

(54) **Integrated multiple particle agent for inductive heating and method of inductive heating therewith**
Partikelförmiger Zuschlagwirkstoff für induktive Erwärmung und mit diesem durchgeführtes Erwärmungsverfahren
Agent d'addition particulaire pour le chauffage par induction et chauffage par induction l'utilisant

(30) Priority: 22.07.1988 US 223413
(43) Date of publication of application: 28.02.1990
(73) Proprietor: Heller, William C., Jr., Milwaukee Wisconsin 53202 (US)
(72) Inventor: Leatherman, Alfred Fuller, Columbus (Upper Arlington) Ohio 43220 (US)
(74) Representative: Sajda, Wolf E., Dipl.-Phys.

(56) References cited:
- EP-A- 0 171 604
- EP-A- 0 218 191
- FR-A- 2 001 664
- FR-A- 2 014 059
- FR-A- 2 132 764
- FR-A- 2 348 957
- GB-A- 1 135 803
- JP-A-54 161 645
- JP-A-56 055 474
- JP-A-61 171 783
- JP-A-63 118 391
- US-A- 3 391 846
- US-A- 3 941 641
- PATENT ABSTRACTS OF JAPAN, vol. 11, no. 170 (P-581), 2nd June 1987; & JP-A-62 001 145 (TOSHIBA CORP.) 07-01-1987

## Description

The present invention is particularly directed to an integrated multiple particle heating agent and the method of fusion bonding using such agent, and particularly for heating of another medium, forming of high quality bonds to one or more substrates and the like.

Fusion bonding of plastic substrates has used micron sized ferrous particles imbedded within or applied to the substrates or alternatively, submicron size ferromagnetic particles such as magnetic iron oxide particles imbedded within or applied to plastic substrates. A radio frequency field is applied and heat is generated within the particles to produce a fusion bonding of the substrates. The ferromagnetic particles respond to a radio frequency magnetic field to create heat as a result of hysteresis. Ferrous particles in a radio frequency filled create eddy currents within the ferrous particles to create heat.

The French document FR-A-2 001 664 discloses a process for joining metal objects by induction bonding with a heating agent. The agent comprises an inductive material which may be a) ferromagnetic and conductive, b) electrically conductive but not ferromagnetic or c) ferromagnetic but not electrically conductive. The inductive particles should have a dimension in the range 45 to 150 µm.

The French document FR-A-2 014 059 also discloses a fusion bonding process making use of an inductive heating agent. The agent can comprise a material which is a) ferromagnetic and electrically conductive, b) electrically conductive but not ferromagnetic or c) ferromagnetic but not electrically conductive. The inductive materials should have particle sizes in the range of 75 to 150 µm.

U.S. Patent 3,461,014 and others to the present inventor disclose non-conductive magnetic iron oxide for bonding fusion through hysteresis heating. Fusion heating with conductive ferrous particles is well known and are found in U.S. Patent 2,393,541 and U.S. Patent 3,620,875.

U.S. Patent 3,941,641 discloses addition of magnetic metal alloys in a hysteresis heating agent and application of a low or audio frequency field for purposes of agitating the interface of the bonding materials. That patent also notes that the conductive metal alloy particles may also generate some heat as a result of eddy currents and may in fact generate heat somewhat more quickly as well as providing localized mechanical forces, and that mixing of still other particles may vary the flux characteristic to increase the responsiveness of the ferromagnetic particles. The patent teaching however is particularly directed to the hysteresis particle heating in the presence of an audio frequency source plus a radio frequency source.

Further, eddy current heating with the large ferrous particles requires use of high frequency equipment generally operating in a range of 5 to 30 megahertz (MHz). In contrast, the use of the non-conductive ferromagnetic oxide particles with hysteresis operates in a much lower frequency range and generally in a range of 2 to 4 megahertz which is generally uniformly considered as undesirable and impractical for ferrous particles.

In induction heating a maximum heating rate for any given power or current is desired for efficient production as well as minimum power consumption to minimize cost for maximum efficiency of production. With increasing current, the heat rate increases quite rapidly in the hysteresis formulation whereas in eddy current formulations, a more gradual increase is obtained. However, the design requirements for the coils to make use of high current and frequency levels can be extremely difficult to implement.

An object of the present invention is reducing the time and cost of production without reducing the quality of product.

According to the present invention, a process of fusion bonding plastic substrates and a heating agent suitable for use therein are provided as defined in claims 1 and 11. As set forth in claim 1 and 7, the heating agent consists of non-conductive particles of a submicron size and of conductive particles of a micron size which are thoroughly intermixed into a particle aggregate forming an essentially uniform integrated heating agent in a resin carrier to interact in response to a magnetic field of RF frequency.

The heating agent results in an unexpected major improvement in the heating and bonding characteristics, and particularly in the resulting heat rate.

The percentage loading of the integrated particle heating agent is not critical but significant quantities of both the submicron non-conductive particles and the micron sized particles for the simultaneous different heating characteristic formations are preferred to obtain the significant benefit and ferrous particle weights should be of greater percentage weight than the non-conductive particle weight as defined in claims 4 to 6 and 12 to 14. If the conductive particles are not greater than 74 µm (200 mesh), to avoid special consideration in handling can be avoided.

As set forth in claims 2 and 3, the radio frequency magnet field can be in the range of 50 kHz to 7 megahertz (MHz), with a preferred range of 1.8 to 4.8 MHz and 3.5 to 4 MHz being a typical range.

An important objective of the invention in addition to the increased heating rate is the achievement of a bonding agent that produces a sufficiently strong bond for the specified application and use. Both the preferred ferrous particles and the oxide particles are in effect foreign materials that can have a negative effect on resultant bond strength if used in excessive quantities in the bonding material carrier resin. The level of adverse effect varies with the identity of the carrier resin. The resins used for the various formulas set forth herein are preferably from the polypropylene family and feasible uses exist even for the most highly loaded of the examples given herein.

The present inventor has thus found that by using the integrated submicron sized non-conductive particles and micron sized conductive particles, heat generation is obtained at a rate significantly and unexpectedly greater than the combined heating rate of the two materials alone when subjected to a single RF magnetic field. Further, highly uniform interface heating is provided. Another advantage which has been found is the ability to effectively bond with a greater distance between the high frequency coil and the work. The integrated multiple particle agent can be handled in commercial production as by extruding and the like. The material is stable and readily affixes to substrates and maintains its integrity during the working and processing of the work.

The increased heating rate, without sacrifice of uniformity of heating, of course also dramatically decreases the production time required to effect any particular heating or bonding process as more fully disclosed by tests conducted by the inventor and disclosed in the detailled description of the embodiments.

The inventor's investigation to date has indicated that a preferred combination of 25 percent ferromagnetic oxide and 40 percent ferrous particles with an inert bonding resin provides a highly satisfactory fusion bonding element. The combination provides a highly satisfactory commercial agent and in particular an extrudable agent with a significantly acceptable mechanical or fusion type attachment to a plastic substrate. The heating is created without significant adverse arcing. Although the strength of the bond may not be totally equal to a standard which is established by the use of hysteresis particles, test of the bond showed it to be more than adequate, and readily justified by the greater efficiency in production.

The particular relative percentage loading may vary with the particulars of the substrates and the like. The incorporation of the ferrous conductive particles, for example, requires a somewhat thicker layer. Although the present heating agent may not provide as thin a layer as permitted with the non-conductive particles alone, the new agent permits a significant reduction in the thickness of the bonding agent when compared to other conductive metal eddy current systems. Further, the proportion of the small submicron particles can be increased with the larger sized particles decreased if necessary as a compromise which accepts less than optimum heating efficiency. However, thicker bonding agents with the integrated particles will improve the heat distribution and thermal activity throughout the bonding element and substrates when compared to the various prior art approaches of a single particle heating process.

In summary, the present invention not only improves the bonding or heating process but further permits use of cost efficient apparatus.

The drawings furnished herewith generally illustrate embodiments of the invention and are described hereinafter.

In the drawings:
Fig. 1 is a side view of a pair of substrates located in an inductive bonding apparatus;
Fig. 2 is an enlarged sectional view of the substrates shown in Fig. 1;
Fig. 3 is an enlarged fragmentary view of a bonding agent shown in Figs. 1 and 2;
Fig. 4 is a graphical illustration of the heating rates of various prior art formulations and the present unique formulations; and
Fig. 5 is a similar graphical illustration at a lower radio frequency.

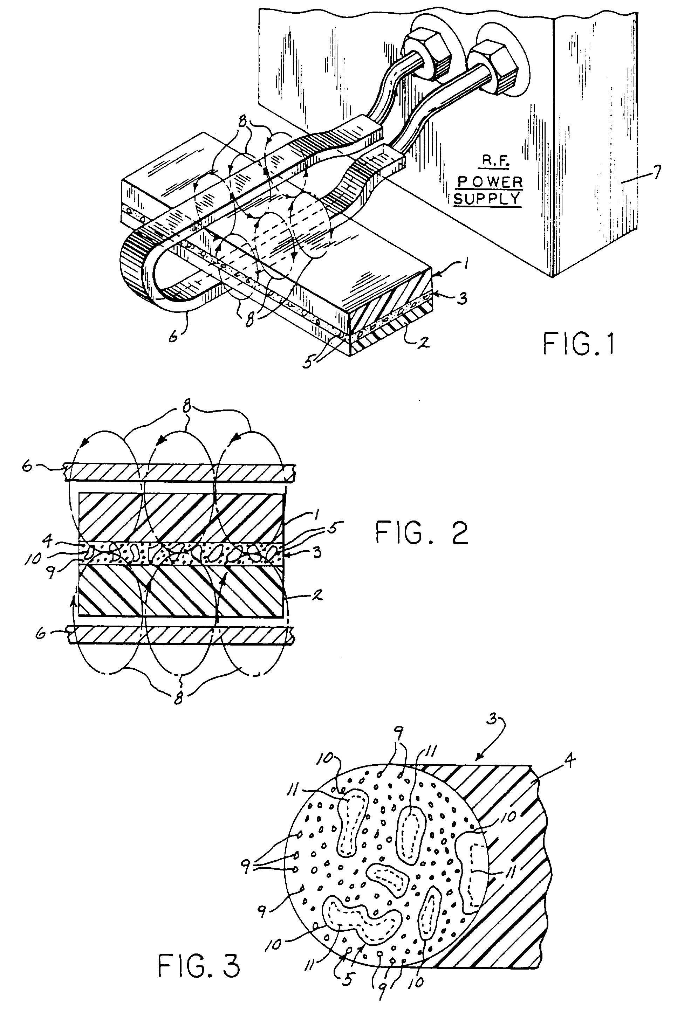

Referring particularly to the drawings and to Figs. 1 and 2, an embodiment as illustrated is applied to a simple bonding of a first plastic substrate 1 to a second plastic substrate 2 with an interposed bonding layer 3. Substrates 1 and 2 may, for example, be various plastic elements which are to be bonded over an interface area to form a composite article. The present invention is described in connection with such an embodiment because it is typical of the significant development over the years by the present inventor and assignee in the field of inductive fusion bonding of plastic materials.

Bonding element or layer 3, as shown in Fig. 3, consists of a compatible plastic resin material 4 which is compatible with and fusion bonds to each of the particular plastic substrates 1 and 2. The bonding element 3 has incorporated therein a dispersion or distribution of the integrated multiple particles 5 of the present invention. In Fig. 3, a portion of the element 3 is shown without the particles 5 to permit sectioning to show the plastic.

A radio frequency coil unit 6 is shown encircling the composite structure, and connected to a radio frequency source 7 which generates a radio frequency magnetic field 8 impressed on and through the composite structure. Frequency source 7 establishes a magnetic field in the megahertz range and preferably in the range of about 1.8 to 7 megahertz (MHz). The inventor's present analysis indicates that a magnetic field should be at least 10 000 hertz (Hz) and that any significantly lower frequency such as the audio frequency range does not obtain practical results and benefits as hereinafter discussed.

The radio frequency source 7 and the coil unit 6 are readily known devices which are commercially and readily available.

Preferably, the particle bonding layer 3 includes two distinct and different particles, including submicron sized particles 9 and larger micron sized particles 10, as shown in Fig. 3.

Particles 9 are shown as small generally spherical particles, but other shapes and configurations are available. The relatively large metal particles 10 are iron particles and have a significant body size, particularly when compared to the submicron particles 9. Magnetic field 8 induces a current flow 11 within particles 10 as small, short circuited eddy current.

The small submicron particles 9 are non-conductive ferromagnetic oxide, generally including gamma ferric oxide (Fe₂O₃) and ferrosoferric oxide (Fe₂O₃ FeO), more commonly known as magnetite and previously used in fusion bonding. Such particles are fine submicron sized and are presently readily available in powder-like form, and gamma ferric oxide provides a practical and optimum particle.

Generally, the particles 10 are in a range up to 75 µm , but at least 1 µm in size. Larger iron particles are desirable because a greater heat rate can be obtained. The particles 10 respond to the same inductive field 8 as the particles 9 to generate heat due essentially to the inductive creation of eddy currents 11 and the resulting resistive losses therein.

With a thorough mixing and distribution of the small particles 9 and the large particles 10, the heat in the element 3 has been measured and was significantly uniform, with uniform heating of substrates 1 and 2. Particles 10 function as heat distributors and rapidly distribute the heat throughout the agent.

The inventor considers the results are based on the probability that the different particles change and modify the heat distribution and the magnetic reluctance or permeability within the element or layer 3 in such a manner that each of the different particles respond in a dramatic and interrelated manner. Thus, increases of 200% to 600% are readily obtained in the heating characteristic and increases of 1 000% and 2 000% have been encountered. Nothing in the literature the inventor has seen would appear to explain this dramatic change, or suggest that the combination should be used. This is particularly true in view of the fact that generally the particles 9 have been used with a frequency source in the range of 2 to 4 megahertz. In contrast, in the wide usage of eddy current heating including fusion bonding, the magnetic field is uniformly operated in the range of 5 to 30 megahertz.

Although single particle sizes can, of course, be used in the integrated multiple particle agent, graduated sizes of each of the particles 9 and 10 may, of course, also be used. In any event, the integrated particles 5 should include a significant weight of micron particles and also a significant,and preferably lesser, weight of the submicron-sized particles.

Preferably, with the present-day technology, a generalized formulation, with percentage by weight, is provided consisting of approximately 40% ferrous iron particles, 25% gamma ferric oxide particles and a balance of an inert resin material such as polypropylene.

The bonding agent is then desirably an extrudable bonding layer. The integrated multiple particle heating agents are generally operated in the range of 1.2 to 7 megahertz, with a lower range of 1.8 to 4.8 megahertz preferred. A typical frequency is 3.5 - 4 megahertz. The lower frequencies permit ready designing and building relatively large coils to encircle relatively large panels to be bonded to other members, such as in automobile manufacture. Operating large coils in a range of 5 to 30 megahertz and above makes the design difficult and the coil construction highly expensive. The lower frequency decreases the heating rate somewhat, but the overall heating rate reduction with the present invention is significantly less than that encountered in the prior art and particularly when compared to the ferrous iron used in eddy current heating.

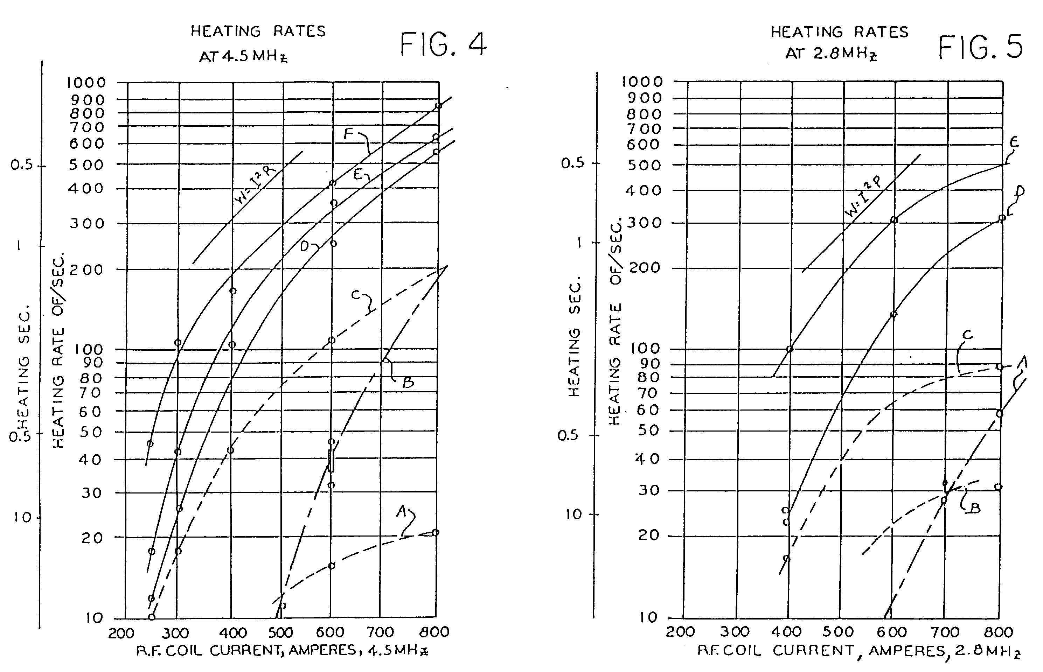

The significant difference in the results obtained compared to conventional inductive heating in the present field is illustrated in the graphical presentations of Figs. 4 and 5.

Fig. 4 is a graphical representation illustrating the different results between prior art formulations and embodiments of the present invention, as listed in Table 1. A single non-conductive ferromagnetic oxide particle formulation (B) is shown as a standard heating reference. Ferrous metal particle formulations (A, C) and thus integrated particle formulations (D, E, F) are also shown.

The formulation curves are shown in Fig. 4, with ferrous metal particle curves (A, C) in dashed lines, non-conductive particles (B) in a phantom line and the integrated particles (D, E, F) in solid lines.

**TABLE I**

| SELECTED HEATING RATES AT 4.5 MHz and 600 A | | | |
|---|---|---|---|
| Bonding Agent | Composition | Heating Rate | Comparison |
| A | 40%<74 µm (-200 mesh) iron, 60% inert | 8.9°C/s (16°F/s) | 41% |
| B | 30% ferric oxide, 70% inert, "standard" | 22°C/s (39°F/s) | 100% |
| C | 60% 74 to 840µm (20-200 mesh) iron, 40% inert | 59.9°C/s (108°F/s) | 277% |
| D | 25% ferric oxide, 40%<74 µm (-200 mesh), 35% inert | 142°C/s (255°F/s) | 654% |
| E | 20% ferric oxide, 50%<74 µm (-200 mesh), 30% inert | 202°C/s (364°F/s) | 933% |
| F | 20% ferric oxide, 50% 74 to 840 µm (20-200 mesh), 30% inert | 236°C/s (425°F/s) | 1 090% |

The test arrangement for obtaining of the above results used a hairpin type coil having cooled conductors which were 1.9 cm (3/4 inch) in width and approximately 0.6 cm (1/4 inch) thick. The coil sides were spaced from each other by 0.6 cm (0.25 inches) and from the specimen by slightly less than one-half that spacing.

In Table I, the sample bonding agent (D) consists of 25% ferric oxide and 40% of a <74 µm (-200 mesh) ferrous iron. The balance is an inert material. The integrated particle 5 of all samples (D, E, F) basically uses the bonding particles of samples labeled (A) and (B).

The two individual formulations (B, A) provide a heating rate of 100% for the ferromagnetic standard formulation and 41% for the <74 µm (-200 mesh) iron formulation.

The integrated particle formulation (D) however provides a heating rate of 142°C (255°F) per second, which compared to the standard produces an increase in heating of 654%, with formulation (E, F) showing further increases and significant improvement over the prior art.

Generally, inductive ferrous heating required at least 40% particle content by weight. Oxide particle heating generally required on the order of 20-25% oxide particles by weight. These percentages are related to the typical resins such as polyethylene, polypropylene and plastic of a similar density and weight. Other resins such as fluoroplastic have a greater density and the formula would be adjusted accordingly. Basically, the particle aggregate is a corresponding preferred 60% ferrous particles and 40% oxide particles. If the prior art mixture, such as examples A and B, are directly combined, the resulting combination provides a combination of hysteresic oxide particles equal to 15% by weight and inductive iron heating particles equal to 20% by weight. The oxide weighting has been reduced by 50%. However, the heat rate at least equals that of the oxide and is believed to give improved bonding results. Each of the particles has its own chemical charcteristic and reaction with the carrier resin. The combination permits the desired loading with reduced adverse effect. The integrated particles might thus be used with various resins where normal loading of either one of the particles alone would not provide a satisfactory result because of the adverse interaction between the chemistry of the particular particle and the resin. The small hysteresic particles which are generally in the submicron size in particular present a large surface area which would tend to increase a reaction. The cost of the proper oxide particles is also significantly greater than for the ferrous iron particles, and the reduction in the oxide loading contributes to a more cost effective process and product. The combination of the reduced oxide and iron provides for the desired loading at a reduced cost to maintain the rapid and effective bond while minimizing the probability of adverse interactions of the products.

The integrated particle (D, E, F) combination also provides the impressive heating rates as shown in Table I, whereas formulation (A, B and C) would not be generally acceptable.

The following Table II provides selected heating rates at 2.8 megahertz and 600 A. Again, the ferromagnetic oxide of the same formulation (Table I, B) was used as a standard (A). A ferrous iron formulation at 60 percent < 74 µm (-200 mesh) particles was used for comparative runs (B, C) at 2.8 MHz because results for the 40 percent formulation (Table I, A) at this lower frequency were too low to be accurately measured. Formulations (D, E) are the same as (D, F) of Table I.

**TABLE II**

| SELECTED HEATING RATES AT 2.8 MHz and 600 A | | | |
|---|---|---|---|
| Bonding Agent | Composition | Heating Rate | Comparison |
| A | 30% ferric oxide, 70% inert, "standard" | 8.3°C/s (15°F/s) | 100% |
| B | 60%<74 µm (-200 mesh) iron, 40% inert | 13°C/s (23°F/s) | 153% |
| C | 60% 74 to 840 µm (20-200 mesh) iron, 40% inert | 36°C/s (64°F/s) | 427% |
| D | 25% ferric oxide, 40%<74 µm (-200 mesh), 35% inert | 78.8°C/s (142°F/s) | 947% |
| E | 20% ferric oxide, 50% 74 to 840 µm (20-200 mesh), 30% inert | 177°C/s (319°F/s) | 2 127% |

The results of Table II formulations are graphically shown in Fig. 5, with corresponding line presentation.

The increases of the present embodiments (D, E) are even more dramatic, even though essentially identical particles and proportions were used. As Table II shows, although formulation E has less oxide than A and less iron than B, the results for E are over 2000% higher than for A and over 1000% higher than for B. The dramatic changes as shown on semi-log graphical paper provide a more complete presentation of all data.

Further, applicant has conducted heat pattern tests on substrates. The inventor found that with ferrous particle eddy current heating, a uniform heat pattern could not be obtained even on relatively long heat cycles, such as 20 to 30 seconds. The integrated particle formulation with the same ferrous particles and the non-conductive ferromagnetic particle in a magnetic field of 2,5 megahertz resulted in a practically instantaneous uniform heating pattern throughout the layer. An analysis would indicate that the submicron particles, that is, those less than 1 µm in the new formulation, establish small thermal distances between the oxide particles, between the oxide and ferrous particles, and between the ferrous particles. The inventor has also found that the small submicron particles do, at times, tend to form an agglomerate and a resulting hot spot. The thorough mixing during preparation appears to minimize any such formation. The larger ferrous metal particles appear to grind and separate any agglomerate of the small submicron particles, with a further uniform dispersion of the particles in the integrated multiple particle agent.

The effect of the present invention as applied in connection with epoxy adhesives as an embodiment was also analyzed. A commercial two-part epoxy adhesive material described to be inductively heated by the Lord Corporation identified by the Lord's number Fusor 320I/322I was used. The material has gamma ferric oxide particles which is understood to be approximately 15% by weight. Inductive heating required 90 seconds to establish a "gel" state at a current of 600 A.

Tests were run adding 40% by weight of a <74 µm (-200 mesh) ferrous particle to the adhesive. A "gel" state was established in 60 seconds at only 200 A.

The added iron was Anchor 1000 sold by Hoeganeas Corporation, which was specially processed to remove any particle over 74 µm (200 mesh) in size. A "gel" condition was reached in 45 seconds at 225 A, and in 20 seconds at 250 A. An early Lord formulation having a loading of 30% by weight of the particles required 60 seconds at 485 amperes to create the "gel" condition. The new formulation also produces a bond of greater strength than the more recent Lord formulation. The effect of this dramatic improvement indicates that epoxy bonding may be advantageously used in areas requiring relatively large panel bonding as the result of increased energy efficiency permitting more modest power sources and more readily fabricated coils.

The invention can, however, obviously be applied to various other carrier resins and particularly to those which have heretofore presented great difficulty in the fusion bonding area. Heat activatable liquid urethane adhesives and a combination of epoxy and urethane adhesive materials would appear to advantageously use the new heating system. The particle loading of the adhesive may be decreased to decrease the viscosity which permits practical and reliable application to the substrate as by pumping. The reduction in the particle loading, particularly with a significant portion being the submicron particles 9, reduces pump wear. The present invention can also be tailored to a particular adhesive as the carrier resin with the proper viscosity for a given application, and will be particularly useful in connection with polypropylene, polyethylene, polycarbonates, and polyamide which are widely used and have often created some degree of difficulty in bonding.

A heat generating element can readily be fabricated into a selected shape. For example, the mixture may be readily incorporated into a bladder or other actuating device such as disclosed in United States patent 4,541,891 which issued to Alfred F. Leatherman on September 17, 1985. By forming different shapes of actuating devices, heat seals in a great variety of shapes can be achieved.

The combined particles can be activated in a domestic microwave energy field. For example, a silicone resin including a mixture of 20% ferric oxide particles and 30% < 74 µm (minus 200 mesh) ferrous particles iron in a 50% RTV 700 silcone rubber carrier which was approximately 0.97 mm (0.038 inches) thick was tested in a conventional domestic oven. The resin in the element became an estimated 93°C (200°F) in response to heating in a microwave oven with a 650 watt power rating operated for 10 to 15 seconds.

## Claims

1. A process of fusion bonding first and second plastic substrates (1, 2) by subjecting the substrates to a radio frequency magnetic field, comprising the steps of mixing a first plurality of non-conductive particles (9) having a submicron size and a second plurality of conductive particles (10) having a micron size, said first and second plurality of particles (9, 10) being thoroughly distributed with each other to define a single integrated particle aggregate, and mixing said mixed particles (9, 10) with an inductively inert carrier resin (4) to form a heating agent, said first particles (9) being responsive to a magnetic field (8) to generate heat because of hysteresis, said second particles (10) being responsive to said same magnetic field (8) to generate heat because of eddy current flow in said second particles, placing the heating agent in the form of a bonding layer (3) in intimate contact with said substrates, and subjecting said substrates (1, 2) and bonding layer (3) to said magnetic field (8).

2. The process of claim 1, wherein said magnetic field (8) includes a radio frequency selected from the range of 50 kHz to 7 MHz.

3. The process of claim 1 or 2, wherein said magnetic field (8) includes a radio frequency selected from the range of 1.2 to 7 MHz, in particular the range of 1.8 to 4.8 MHz, more particularly the range of 3.5 to 4.0 MHz.

4. The heating process of any of claims 1 to 3, wherein said second particles (10) constitute a greater percentage by weight than said first particles (9) of the total particle mass.

5. The process of any of claims 1 to 4, wherein second particles (10) constitute about twice the weight of the first particles (9).

6. The process of any of claims 1 to 5, wherein the second particles (10) constitute substantially 40 percent by weight of the bonding layer (3) and said first particles (9) constitute substantially 25 percent by weight of said bonding layer (3), the balance formed by the inert carrier resin (4).

7. The process of any of claims 1 to 6, wherein said second particles (10) are larger than 74 micrometer (200 mesh) and said first particles (9) are less than 1 micrometer.

8. The process of any of claims 1 to 7, wherein said particle aggregate (9, 10) is distributed throughout said bonding plastic layer (3) to define a selected heating pattern of a substantially constant heat level.

9. The process of any of claims 1 to 8, wherein the carrier resin (4) of the bonding layer (3) is molten to establish a readily flowing bonding layer (3).

10. The process of any of claims 1 to 9, including providing a heating coil (6) connected to an RF source (7) with the coil sides spaced from each other by about 6.4 mm (1/4 inch) and from the bonding layer (3) by slightly less than 3.2 mm (1/8 inch).

11. An accelerated heating agent suitable for use in fusion bonding plastic substrates (1, 2) in the presence of a magnetic field (8), said heating agent comprising a carrier resin (4), a first plurality of non-conductive particles (9) having a submicron size, a second plurality of conductive particles (10) having a micron size, said first and second plurality of particles (9, 10) being thoroughly dispersed to define a single integrated particle aggregate, said first particles (9) being responsive to a magnetic / field (8) to generate heat because of hysteresis, said second particles (10) being responsive to said same magnetic field (8) to generate heat because of eddy current conduction in said second particles (10), whereby said integrated particles (9, 10) are responsive to said magnetic field (8) and heat said carrier resin (4) and said substrates (1, 2) at an accelerated rate.

12. The heating agent of claim 11, wherein the second particles (10) constitute a greater weight than the first particles (9).

13. The agent of claim 11 or 12, wherein the second particles (10) constitute about twice the weight of the first particles (9).

14. The agent of any of claims 11 to 13, wherein the second particles (10) constitute substantially 40 percent by weight and said first particles (9) constitute substantially 25 percent by weight of the total heating agent, the balance formed by the carrier resin (4).

15. The agent of any of claims 11 to 14, wherein said second particles (10) are larger than 74 micrometer (200 mesh) and said first particles (9) are less than 1 micrometer.

16. The agent of any of claims 11 to 15, wherein said integrated particle aggregate is responsive to a radio frequency in the range of about 1.2 to 7 MHz.

17. The agent of any of claims 11 to 16, wherein the carrier resin (4) is one of a thermoplastic, a thermoset plastic, a polypropylene plastic or a hot melt adhesive.

## Patentansprüche

1. Verfahren zum Schmelzverbinden eines ersten und zweiten Kunststoffsubstrates (1, 2), bei dem die Substrate einem Hochfrequenz-Magnetfeld ausgesetzt werden, wobei das Verfahren die folgenden Schritte aufweist:
- Mischen einer ersten Vielzahl von nicht-leitfähigen Partikeln (9) von submikroskopischer Größe und einer zweiten Vielzahl von leitfähigen Partikeln (10) von mikroskopischer Größe, wobei die erste und zweite Vielzahl von Partikeln (9, 10) sorgfältig miteinander vermischt werden, um ein einziges integriertes Partikelaggregat zu bilden,
- Mischen dieser gemischten Partikel (9, 10) mit einem induktiv inerten Trägerharz (4), um ein Heizmittel zu bilden, wobei die ersten Partikel (9) auf ein magnetisches Feld (8) derart ansprechen, daß sie Wärme aufgrund von Hysterese erzeugen, während die zweiten Partikel (10) auf dasselbe magnetische Feld (8) derart ansprechen, daß sie Wärme aufgrund eines Wirbelstromflusses in den zweiten Partikeln erzeugen,
- Einbringen des Heizmittels in Form einer Bindemittelschicht (3) in innigen Kontakt mit den Substraten und
- Beaufschlagen der Substrate (1, 2) und der Bindeschicht (3) mit dem magnetischen Feld (8).

2. Verfahren nach Anspruch 1,
wobei das magnetische Feld (8) eine Hochfrequenz aufweist, die aus dem Bereich von 50 kHz bis 7 MHz gewählt ist.

3. Verfahren nach Anspruch 1 oder 2,
wobei das magnetische Feld (8) eine Hochfrequenz aufweist, die aus dem Bereich von 1,2 bis 7 MHz, insbesondere aus dem Bereich von 1,8 bis 4,8 MHz, speziell aus dem Bereich von 3,5 bis 4,0 MHz gewählt ist.

4. Verfahren nach einem der Ansprüche 1 bis 3,
wobei die zweiten Partikel (10.) einen größeren Gewichtsanteil als die ersten Partikel (9) der gesamten Partikelmasse ausmachen.

5. Verfahren nach einem der Ansprüche 1 bis 4,
wobei die zweiten Partikel (10) ungefähr ein doppelt so hohes Gewicht wie die ersten Partikel (9) ausmachen.

6. Verfahren nach einem der Ansprüche 1 bis 5,
wobei die zweiten Partikel (10) nach Gewicht im wesentlichen 40% der Bindemittelschicht (3) und die ersten Partikel (9) nach Gewicht im wesentlichen 25% der Bindemittelschicht (3) ausmachen, wobei der Rest von dem inerten Trägerharz (4) gebildet wird.

7. Verfahren nach einem der Ansprüche 1 bis 6,
wobei die zweiten Partikel (10) größer als 74 µm (200 Mesh) und die ersten Partikel (9) kleiner als 1 µm sind.

8. Verfahren nach einem der Ansprüche 1 bis 7,
wobei das Partikelaggregat (9, 10) in der gesamten Kunststoffbindemittelschicht (3) verteilt ist, um eine ausgewählte Heizstruktur mit einem im wesentlichen konstanten Heizpegel zu bilden.

9. Verfahren nach einem der Ansprüche 1 bis 8,
wobei das Trägerharz (4) der Bindemittelschicht (3) geschmolzen wird, um eine leicht fließende Bindemittelschicht (3) zu bilden.

10. Verfahren nach einem der Ansprüche 1 bis 9,
bei dem eine Heizspule (6) vorgesehen wird, die an eine HF-Versorgung (7) angeschlossen ist, wobei die Spulenseiten voneinander durch eine Distanz von ca. 6,4 mm (1/4 Inch) und von der Bindemittelschicht (3) durch eine Distanz von etwas weniger als 3,2 mm (1/8 Inch) beabstandet sind.

11. Schnellwirkendes Heizmittel, geeignet zur Verwendung beim Schmelzverbinden von Kunststoffsubstraten (1, 2) in Gegenwart eines magnetischen Feldes (8), wobei das Heizmittel ein Trägerharz (4), eine erste Vielzahl von nicht-leitfähigen Partikeln (9) von submikroskopischer Größe und eine zweite Vielzahl von leitfähigen Partikeln (10) von mikroskopischer Größe aufweist, wobei die erste und zweite Vielzahl von Partikeln (9, 10) gründlich verteilt sind, um ein einziges integriertes Partikelaggregat zu bilden, wobei die ersten Partikel (9) auf ein magnetisches Feld (8) derart ansprechen, daß sie Wärme aufgrund von Hysterese erzeugen, während die zweiten Partikel (10) auf dasselbe magnetische Feld (8) derart ansprechen, daß sie Wärme aufgrund einer Wirbelstromleitung in den zweiten Partikeln (10) erzeugen, wobei die integrierten Partikel (9, 10) auf das magnetische Feld (8) ansprechen und das Trägerharz (4) und die Substrate (1, 2) in beschleunigtem Maße erwärmen.

12. Mittel nach Anspruch 11,
wobei die zweiten Partikel (10) ein größeres Gewicht als die ersten Partikel (9) ausmachen.

13. Mittel nach Anspruch 11 oder 12,
wobei die zweiten Partikel (10) ungefähr ein doppelt so hohes Gewicht wie die ersten Partikel (9) ausmachen.

14. Mittel nach einem der Ansprüche 11 bis 13,
wobei die zweiten Partikel (10) nach Gewicht im wesentlichen 40% und die ersten Partikel (9) nach Gewicht im wesentlichen 25% des gesamten Heizmittels ausmachen, wobei der Rest durch das Trägerharz (4) gebildet wird.

15. Mittel nach einem der Ansprüche 11 bis 14,
wobei die zweiten Partikel (10) größer als 74 µm (200 Mesh) und die ersten Partikel (9) kleiner als 1 µm sind.

16. Mittel nach einem der Ansprüche 11 bis 15,
wobei das integrierte Partikelaggregat auf eine Hochfrequenz im Bereich von 1,2 bis 7 MHz anspricht.

17. Mittel nach einem der Ansprüche 11 bis 16,
wobei das Trägerharz (4) ein Thermoplast, ein in Wärme aushärtendes Kunstharz, ein Polypropylenkunststoff oder ein Hot-Melt-Kleber ist.

## Revendications

1. Procédé de collage par fusion d'un premier et d'un second substrat en matière plastique (1, 2) en soumettant les substrats à un champ magnétique à radiofréquence, comprenant les étapes consistant à :
mélanger une première pluralité de particules non-conductrices (9) ayant une taille sub-micronique et une seconde pluralité de particules conductrices (10) ayant une taille de l'ordre du micron, lesdites première et seconde pluralités de particules (9, 10) étant intimement distribuées l'une avec l'autre de manière à définir un agrégat unique de particules intégrées, et
mélanger lesdites particules mélangées (9, 10) avec une résine porteuse (4) inerte sur le plan inductif pour former un agent chauffant, lesdites premières particules (9) réagissant à un champ magnétique (8) pour produire de la chaleur à cause de l'hystérésis, lesdites secondes particules (10) réagissant au même champ magnétique (8) pour produire de la chaleur à cause de la circulation de courants de Foucault dans lesdites secondes particules,
à placer ledit agent chauffant sous la forme d'une couche de collage (3) en contact intime avec lesdits substrats, et
soumettre lesdits substrats (1, 2) et ladite couche de collage (3) audit champ magnétique (8).

2. Procédé selon la revendication 1, dans lequel ledit champ magnétique (8) inclut une radiofréquence choisie dans la plage de 50 kHz à 7 MHz.

3. Procédé selon l'une ou l'autre des revendications 1 et 2, dans lequel ledit champ magnétique (8) inclut une radiofréquence choisie dans la plage de 1,2 à 7 MHz, en particulier dans la plage de 1,8 à 4,8 MHz, plus particulièrement dans la plage de 3,5 à 4,0 MHz.

4. Procédé de chauffage selon l'une quelconque des revendications 1 à 3, dans lequel lesdites secondes particules (10) constituent un pourcentage en poids plus important que lesdites premières particules (9) dans la masse totale des particules.

5. Procédé selon l'une quelconque des revendications 1 à 4, dans lequel lesdites secondes particules (10) constituent environ deux fois le poids des premières particules (9).

6. Procédé selon l'une quelconque des revendications 1 à 5, dans lequel les secondes particules (10) constituent sensiblement 40% en poids de la couche de collage (3) et lesdites premières particules (9) constituent sensiblement 25% en poids de ladite couche de collage (3), le reste étant formé par la résine porteuse inerte (4).

7. Procédé selon l'une quelconque des revendications 1 à 6, dans lequel lesdites secondes particules (10) sont supérieures à 74 microns (200 mesh) et lesdites premières particules (9) sont inférieures à 1 micron.

8. Procédé selon l'une quelconque des revendications 1 à 7, dans lequel ledit agrégat de particules (9, 10) est distribué dans toute ladite couche plastique de collage (3) pour définir un motif de chauffage choisi avec un niveau de chauffage sensiblement constant.

9. Procédé selon l'une quelconque des revendications 1 à 8, dans lequel la résine porteuse (4) de la couche de collage (3) est fondue pour établir une couche de collage (3) susceptible de s'écouler aisément.

10. Procédé selon l'une quelconque des revendications 1 à 9, qui inclut la provision d'une bobine de chauffage (6) raccordée à une source de radiofréquence (7), les faces de la bobine étant écartées l'une de l'autre d'environ 6,4 mm (1/4 Inch) et étant écartées de la couche de collage (3) d'une distance légèrement inférieure à 3,2 mm (1/8 Inch).

11. Agent de chauffage accéléré, convenant pour l'utilisation dans des substrats en matière plastique pour le collage par fusion (1, 2) en présence d'un champ magnétique (8), ledit agent de chauffage comprenant une résine porteuse (4), une première pluralité de particules non-conductrices (9) ayant une taille sub-micronique, une seconde pluralité de particules conductrices (10) ayant une taille de l'ordre du micron, lesdites première et seconde pluralités de particules (9, 10) étant intimement dispersées pour définir un agrégat unique de particules intégrées, lesdites premières particules (9) réagissant à un champ magnétique (8) pour produire de la chaleur à cause de l'hystérésis, lesdites secondes particules (10) réagissant au même champ magnétique (8) pour produire de la chaleur à cause de la circulation de courants de Foucault dans lesdites secondes particules (10), grâce à quoi lesdites particules intégrées (9, 10) réagissent audit champ magnétique (8) et réchauffent ladite résine porteuse (4) et lesdits substrats (1, 2) à une vitesse accélérée.

12. Agent de chauffage selon la revendication 11, dans lequel les secondes particules (10) constituent un poids plus élevé que les premières particules (9).

13. Agent selon l'une ou l'autre des revendications 11 et 12, dans lequel les secondes particules (10) constituent environ deux fois le poids des premières particules (9).

14. Agent selon l'une quelconque des revendications 11 à 13, dans lequel les secondes particules (10) constituent sensiblement 40% en poids, et lesdites secondes premières particules (9) constituent sensiblement 25% en poids de l'agent de chauffage total, le reste étant formé par la résine porteuse (4).

15. Agent selon l'une quelconque des revendications 11 à 14, dans lequel lesdites secondes particules (10) sont supérieures à 74 microns (200 mesh), et lesdites premières particules (9) sont inférieures à 1 micron.

16. Agent selon l'une quelconque des revendications 11 à 15, dans lequel ledit agrégat de particules intégrées réagit à une fréquence radio dans la plage d'environ 1,2 à 7 MHz.

17. Agent selon l'une quelconque des revendications 11 à 16, dans lequel la résine porteuse (4) est choisie parmi les matières thermoplastiques, les matières plastiques thermodurcissables, un polypropylène ou un adhésif de collage à chaud.
